# EUROPÄISCHE PATENTANMELDUNG

(11) **EP 1 289 213 A2**
(43) Veröffentlichungstag der Anmeldung: **05.03.2003**
(21) Anmeldenummer: 02019350.4
(22) Anmeldetag: 29.08.2002
(51) Int. Cl.: H04L 25/24

(54) **Optoelektronische Vorrichtung**

(30) Priorität: 31.08.2001 DE 10142807
(71) Anmelder: Leuze electronic GmbH + Co., 73277 Owen/Teck (DE)
(72) Erfinder: Wolf, Tilo, 73240 Wendlingen (DE)
(74) Vertreter: Ruckh, Rainer Gerhard, Dr.

(57) **Zusammenfassung**

Die Erfindung betrifft eine optoelektronische Vorrichtung (1) mit wenigstens einem Sender (10) und einem Empfänger (11) sowie einem Empfangselement (12) und einer Signalaufbereitungseinheit (13), welche dem Sender (10) vorgeordnet sind. Eine Folge von elektrischen Signalen am Empfangselement (12) wird in der Signalaufbereitungseinheit (13) in eine binäre Signalfolge von Low-Signalen und High-Signalen umgesetzt, deren Zeitdauern ganzzahlige Vielfache einer Bitzeit T_{Bit} sind. Zur optischen Datenübertragung sind den vom Sender (10) emittierten Sendelichtstrahlen (8) mittels einer Modulationseinheit (14) den binären Signalfolgen entsprechende Kennungen in Form einer digitalen Modulation mit einer durch ein Modulationszeitintervall T_{mod} gegebenen zeitlichen Auflösung aufgeprägt. Der Signalaufbereitungseinheit (13) und der Modulationseinheit (14) ist ein gemeinsamer Frequenzgenerator (15) zugeordnet, über welchen der Signalaufbereitungseinheit (13) ein Taktsignal mit einer Frequenz f₁ zur Generierung der Bitzeit T_{Bit} und über welchen der Modulationseinheit (14) ein Taktsignal mit einer Frequenz f₂ zur Generierung des Modulationszeitintervalls T_{mod} zugeführt ist.

## Beschreibung

Die Erfindung betrifft eine optoelektronische Vorrichtung gemäß dem Oberbegriff des Anspruchs 1.

Derartige optoelektronische Vorrichtungen dienen zur unidirektionalen oder bidirektionalen optischen Übertragung von Signalfolgen. Dabei können derartige Vorrichtungen insbesondere Bestandteil von Bussystemen sein. Das Bussystem weist eine Anzah 1 von Teilnehmern auf, die über Busleitungen miteinander verbunden sind. Zum Austausch von Informationen zwischen den Teilnehmern werden vorzugsweise binäre Signalfolgen in Form von elektrischen Signalen über die Busleitungen übertragen.

Eine optoelektronische Vorrichtung innerhalb dieses Bussystems bildet eine optische Übertragungsstrecke, über welche diese binären Signalfolgen auf optischem Weg übertragen werden. Dabei ist im Fall einer unidirektionalen Übertragung ein Sender und ein zugeordneter Empfänger vorgesehen, welcher die vom Sender emittierten Sendelichtstrahlen empfängt. Im Fall einer bidirektionalen Datenübertragung weist die optoelektronische Vorrichtung zwei Sender-Empfängerpaare auf.

In jedem Fall ist dem oder jedem Sender ein Empfangselement zugeordnet. Das Empfangselement empfängt die elektrischen Signale, die über die jeweilige Busleitung übertragen werden, an welche der Sender angeschlossen ist. Die so empfangenen elektrischen Signale werden dann mittels der vom Sender emittierten Sendelichtstrahlen zum Empfänger übertragen.

Da die elektrischen Signale typischerweise über große Strecken über die Busleitungen übertragen werden, sind den Nutzsignalanteilen auch erhebliche Rauschanteile überlagert. Dadurch weisen die elektrischen Signale einen sogenannten Jitter auf, das heißt, die zeitlichen Folgen der elektrischen Signale sind stochastisch verzerrt. Zur Elimination dieser Störeinflüsse wird das elektrische Signal einer Signalaufbereitungseinheit zugeführt. Dort wird das elektrische Signal in eine binäre Signalfolge von Low-Signalen und High-Signalen überführt, deren Zeitdauern ganzzahlige Vielfache einer Bitzeit T_{Bit} sind, die über ein Taktsignal mit einer Frequenz f₁ vorgegeben wird, die in einem in der Signalaufbereitungseinheit integrierten Oszillator integriert ist. Mit dieser Signalverarbeitung, dem sogenannten Retiming, wird der ursprüngliche zeitliche Takt der Folgen der elektrischen Signale, die über die Busleitungen übertragen werden, wieder hergestellt.

Die auf diese Weise aufbereitete Signalfolge wird zur Durchführung der optischen Datenübertragung in eine optische Signalfolge umgesetzt. Hierzu wird entsprechend der elektrischen binären Signalfolge den Sendelichtstrahlen des Senders eine Kennung aufgeprägt. Hierzu ist dem Sender eine Modulationseinheit vorgeordnet, mittels derer den Sendelichtstrahlen eine Modulation aufgeprägt wird. Insbesondere kann eine Frequenzmodulation, beispielsweise in Form einer FSK (frequency shift keying) Modulation, durchgeführt werden.

Dabei erfolgt die Modulation digital, das heißt die frequenzmodulierte Amplitude der Sendelichtstrahlen liegt in diskreten Stufen vor, wobei die zeitliche Auflösung dieser Stufen durch ein Modulationszeitintervall T_{mod} vorgegeben ist. Die so gegebene zeitliche Rasterung der digitalisierten Amplitude der Sendelichtstrahlen wird durch einen in der Modulationseinheit integrierten Oszillator erzeugt, welcher ein Taktsignal mit einer Frequenz f₂ generiert.

Nachteilig bei derartigen Vorrichtungen ist, dass die Vorgabe des Zeittakts zur Durchführung des Retimings der elektrischen Signale in der Signalaufbereitungseinheit und die Vorgabe zur digitalen Modulation der Sendelichtstrahlen in der Modulationseinheit in separaten Einheiten erfolgt.

Aufgrund von Alterungen elektrischer Komponenten dieser Einheiten, Temperaturdriften oder externen Störeinflüssen kann es zu einem Driften der Taktsignale in der Modulationseinheit und der Signalaufbereitungseinheit kommen, so dass ein nicht reproduzierbarer zeitlicher Versatz des Takts in der Signalaufbereitungseinheit bezüglich des Takts in der Modulationseinheit entsteht. Dies wiederum kann dazu führen, dass sporadisch die Modulation der Sendelichtstrahlen in der Signalaufbereitungseinheit nicht synchron zu dem Retiming der elektrischen Signale in der Modulationseinheit erfolgt. Aufgrund dieses Bit-Jitters entstehen dann Signalverfälschungen der optisch übertragenen Daten.

Der Erfindung liegt die Aufgabe zugrunde eine optoelektronische Vorrichtung der eingangs genannten Art so auszubilden, dass eine möglichst fehlerfreie optische Datenübertragung gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung weist wenigstens einen Sender und einen Empfänger sowie ein Empfangselement und eine Signalaufbereitungseinheit auf, welche dem Sender vorgeordnet sind. Eine Folge von elektrischen Signalen wird am Empfangselement in der Signalaufbereitungseinheit in eine binäre Signalfolge von Low-Signalen und High-Signalen umgesetzt, deren Zeitdauern ganzzahlige Vielfache einer Bitzeit T_{Bit} sind. Zur optischen Datenübertragung sind den vom Sender emittierten Sendelichtstrahlen mittels einer Modulationseinheit den binären Signalfolgen entsprechende Kennungen in Form einer digitalen Modulation mit einer durch ein Modulationszeitintervall T_{mod} gegebenen zeitlichen Auflösung aufgeprägt. Der Signalaufbereitungseinheit und der Modulationseinheit ist ein gemeinsamer Frequenzgenerator zugeordnet, über welchen der Signalaufbereitungseinheit ein Taktsignal mit einer Frequenz f₁ zur Generierung der Bitzeit T_{Bit} und über welchen der Modulationseinheit ein Taktsignal mit einer Frequenz f₂ zur Generierung des Modulationszeitintervalls T_{mod} zugeführt ist.

Durch die Verwendung eines gemeinsamen Frequenzgenerators sowohl für die Signalaufbereitungseinheit als auch für die Modulationseinheit wird erreicht, dass eine phasenstarre, konstante Phasenbeziehung des in der Signalaufbereitungseinheit generierten Taktes zu dem Takt in der Modulationseinheit besteht. Aufgrund dessen erfolgt die Modulation der Sendelichtstrahlen bitsynchron zu dem Retiming der elektrischen Signale in der Signalaufbereitungseinheit. Dabei ist besonders vorteilhaft, dass die Bitsynchronität auch bei Störeinflüssen, wie zum Beispiel Temperaturdriften und Alterungen von Bauelementen, erhalten bleibt, da derselbe Frequenzgenerator für die Modulationseinheit und Signalaufbereitungseinheit verwendet und sich somit Störungen auf die Taktsignale in identischer Weise auswirken.

Prinzipiell können in dem Frequenzgenerator, der vorzugsweise von einem Quarz-Oszillator gebildet ist, Taktsignale mit verschiedenen Frequenzen f₁ und f₂ generiert werden, wobei wenigstens einer dieser Frequenzen durch Teilen von einer Grundfrequenz generiert wird. Damit ist entweder die Frequenz f₁ ein ganzzahliges Vielfaches von der Frequenz f₂ oder umgekehrt. In jedem Fall ist gewährleistet, dass zwischen den Frequenzen f₁ und f₂ eine feste Phasenbeziehung besteht. In einer besonders vorteilhaften Ausführungsform sind die Frequenzen f₁ und f₂ gleich groß.

Das Taktsignal mit der Frequenz f₁ wird in der Signalaufbereitungseinheit zur Vorgabe der Bitzeiten T_{Bit} verwendet. Dabei ist die Bitzeit T_{Bit} ein ganzzahliges Vielfaches des Kehrwerts von f₁.

Das Taktsignal mit der Frequenz f₂ wird in der Modulationseinheit zur Vorgabe des Modulationszeitintervall T_{mod} verwendet. Dabei ist das Modulationszeitintervall T_{mod} ein ganzzahliges Vielfaches des Kehrwertes von f₂.

Durch die phasenstarre Beziehung zwischen den Frequenzen f₁ und f₂ wird eine entsprechend feste Beziehung der durch die Bitzeit T_{Bit} und das Modulationszeitintervall T_{mod} bestimmten zeitlichen Rasterungen erhalten.

Besonders vorteilhaft sind dabei nicht nur die Frequenzen f₁ und f₂ identisch, sondern auch die Zeitintervalle T_{Bit} und T_{mod}, so dass für das Retiming der elektrischen Signale in der Signalaufbereitungseinheit und die anschließende Modulation in der Modulationseinheit dieselbe zeitliche Rasterung vorliegt. Damit werden Fehler bei der optischen Datenübertragung aufgrund eines Bit-Jitters vollständig ausgeschlossen.

In einer vorteilhaften Ausführungsform der Erfindung ist die optoelektronische Vorrichtung Bestandteil eines Bussystems. Dabei können auch mehrere optoelektronische Vorrichtungen in dem Bussystem integriert sein. In diesem Fall werden die elektrischen Signale über Busleitungen des Bussystems in das jeweilige einem Sender der optoelektronische Vorrichtung zugeordnete Empfangselement eingespeist.

Prinzipiell kann die optoelektronische Vorrichtung auch an andere externe Einheiten angeschlossen sein, über welche elektrische Signale dem jeweiligen Empfangselement zugeführt werden. Beispiele hierfür sind isolierte Rechneroder Steuereinheiten.

Die Erfindung wird im Nachstehenden anhand der Zeichnungen erläutert. Es zeigen:
- Figur 1:: Schematische Darstellung zweier in einem Bussystem integrierter optoelektronischer Vorrichtungen.
- Figur 2:: Blockschaltbild der Komponenten einer optoelektronischen Vorrichtung gemäß Figur 1.
- Figur 3:: Zeitabhängigkeit der Signalverläufe in einzelnen Komponenten der Vorrichtung gemäß Figur 1.

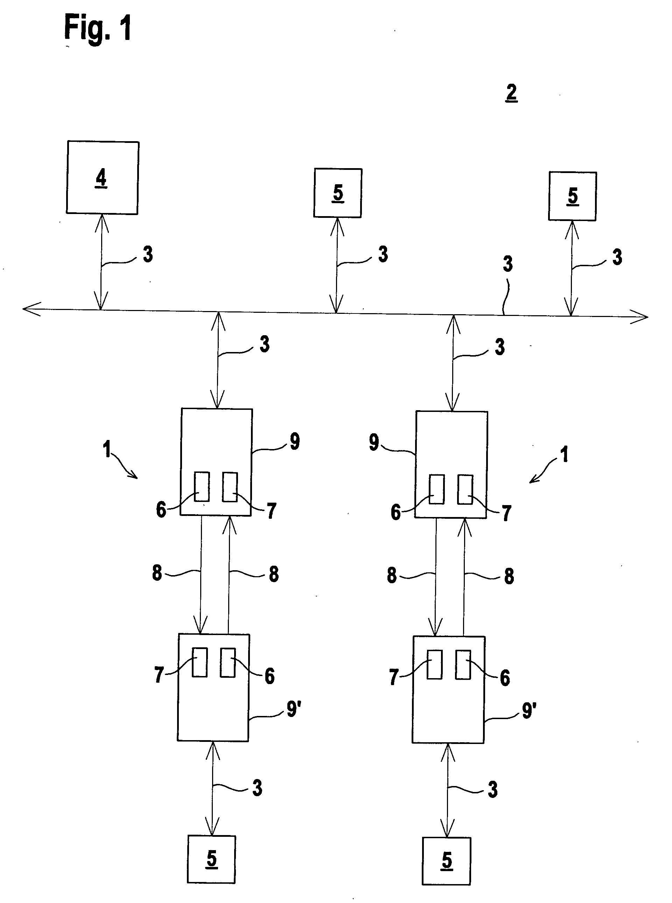

Figur 1 zeigt schematisch zwei optoelektronische Vorrichtungen 1 zur optischen Datenübertragung, welche in einem Bussystem 2 integriert sind.

Das Bussystem 2 ist im vorliegenden Fall als Master-Slave-Bussystem ausgebildet, wobei das Bussystem 2 verschiedene Busteilnehmer aufweist, die über ein System von Busleitungen 3 miteinander verbunden sind. Die Busleitungen 3 sind beispielsweise von Zweidrahtleitungen gebildet.

Als Busteilnehmer ist zum einen eine Steuereinheit vorgesehen, welche den Master 4 des Bussystems 2 bildet. Weitere Busteilnehmer wie zum Beispiel Sensoren, Aktoren, Messwerterfassungsgeräte oder sonstige elektrischen Einheiten bilden die Slaves 5 des Bussystems 2. Der Master 4 übernimmt die Steuerung des Bussystems 2. Hierzu fragt der Master 4 die Slaves 5 zyklisch unter vorgegebenen Adressen ab, worauf die einzelnen Slaves 5 jeweils eine Antwort an den Master 4 senden.

Die Signalübertragung erfolgt leitungsgebunden über das System der Busleitungen 3. Dabei werden zwischen den Slaves 5 und dem Master 4 Telegramme in Form von binären Informationen ausgetauscht, die als elektrische Signale über die Busleitungen 3 übertragen werden.

Die an das Bussystem 2 angeschlossenen optoelektronischen Vorrichtungen 1 dienen zur optischen Übertragung dieser elektrischen Signale und bilden somit Teilstrecken innerhalb des Bussystems 2, über welche eine drahtlose Datenübertragung erfolgt.

Die optische Datenübertragung kann prinzipiell nur in einer Richtung erfolgen. In diesem Fall weist die optoelektronische Vorrichtung 1 eine Sendereinheit 6 und eine in Abstand liegende Empfängereinheit 7 auf, wobei von der Sendereinheit 6 Sendelichtstrahlen 8 in Richtung der Empfängereinheit 7 emittiert werden.

Im vorliegenden Fall erfolgt mittels der optoelektronischen Vorrichtung 1 eine bidirektionale optische Datenübertragung. Jede optoelektronische Vorrichtung 1 weist wie in Figur 1 dargestellt zwei in Abstand zueinander liegende Gehäuse 9, 9' auf. In jedem Gehäuse 9, 9' ist eine Sendereinheit 6 und eine Empfängereinheit 7 integriert. Die von der Sendereinheit 6 in einem Gehäuse 9 oder 9' emittierten Sendelichtstrahlen 8 sind auf die Empfängereinheit 7 im jeweils anderen Gehäuse 9' oder 9 gerichtet.

Die optoelektronischen Vorrichtungen 1 sind jeweils an die Busleitungen 3 des Bussystems 2 angeschlossen. Die elektrischen Signale werden von den Busleitungen 3 in die jeweilige Sendereinheit 6 eingespeist. Dort werden die elektrischen Signale in Kennungen umgesetzt, die den Sendelichtstrahlen 8 in Form einer Modulation aufgeprägt werden. Die so kodierten Sendelichtstrahlen 8 werden von der gegenüberliegenden Empfängereinheit 7 empfangen und dort wieder in elektrische Signale umgesetzt, die an die angeschlossene Busleitung 3 ausgegeben werden.

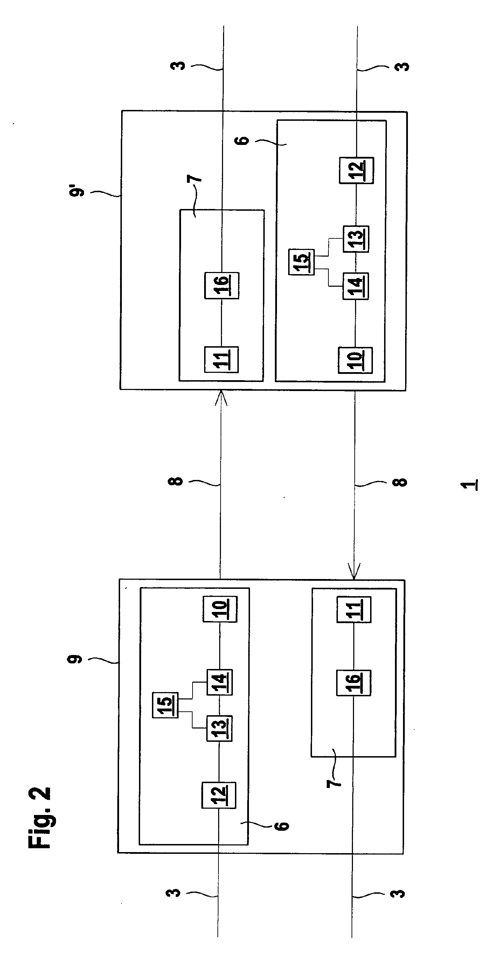

Figur 2 zeigt den Aufbau einer optoelektronischen Vorrichtung 1 gemäß Figur 1. Die in den beiden Gehäusen 9, 9' der optoelektronischen Vorrichtung 1 integrierten Sendereinheiten 6 und Empfängereinheiten 7 sind jeweils identisch ausgebildet.

Jede Sendereinheit 6 weist einen Sendelichtstrahlen 8 emittierenden Sender 10 auf. Der Sender 10 ist beispielsweise von einer Laserdiode gebildet. Zur Strahlformung der Sendelichtstrahlen 8 ist dem Sender 10 eine nicht dargestellte Sendeoptik vorgeordnet.

Jede Empfängereinheit 7 weist einen Empfänger 11 zum Empfang der vom zugeordneten Sender 10 emittierten Sendelichtstrahlen 8 auf. Der Empfänger 11 ist von einer Fotodiode oder dergleichen gebildet. Dem Empfänger 11 ist zur Fokussierung der Sendelichtstrahlen 8 eine nicht dargestellte Empfangsoptik vorgeordnet.

Im vorliegenden Ausführungsbeispiel erfolgt die optische Datenübertragung in Form einer Freiraum-Datenübertragung. Alternativ kann die optische Datenübertragung leitungsgebunden erfolgen. In diesem Fall ist zwischen dem Sender 10 und dem zugeordneten Empfänger 11 eine Glasfaserstrecke vorgesehen, über welche die optische Datenübertragung erfolgt.

Dem Sender 10 jeder Sendereinheit 6 ist ein Empfangselement 12 sowie eine Signalaufbereitungseinheit 13 und eine Modulationseinheit 14 vorgeordnet. Die Signalaufbereitungseinheit 13 und die Modulationseinheit 14 sind an einem gemeinsamen Frequenzgenerator 15 angeschlossen, der von einem Quarz-Oszillator gebildet ist. Der Empfänger 11 ist an eine Auswerteeinheit 16 angeschlossen.

Das Empfangselement 12 ist an eine Busleitung 3 des Bussystems 2 angeschlossen und dient zum Empfang der über die Busleitung 3 übertragenen Signale.

Aufgrund der typischerweise großen Leitungslängen und aufgrund externer Störeinflüsse sind die elektrischen Signale verzerrt, wobei insbesondere ein Jitter der elektrischen Signale vorliegt, das heißt die Zeitintervalle der einzelnen binären Signalzustände der elektrischen Signale sind durch Rauschen gegenüber den Sollwerten verzerrt.

Zur Elimination dieses Jitters werden die im Empfangselement 12 empfangenen elektrischen Signale der nachgeordneten Signalaufbereitungseinheit 13 zugeführt. Dort erfolgt ein Retiming der elektrischen Signale. Dies bedeutet, dass aus den elektrischen Signalen eine binäre Signalfolge von Low-Signalen und High-Signalen generiert wird, wobei die Zeitdauern ganzzahlige Vielfache einer Bitzeit T_{Bit} sind. Die Bitzeit T_{Bit} bildet somit die Grundeinheit einer zeitlichen Rasterung, auf welche die Signalfolge abgebildet wird. Die Vorgabe der Bitzeit T_{Bit} erfolgt über ein Taktsignal mit einer Frequenz f₁. Dabei wird die Bitzeit T_{Bit} in der Signalaufbereitungseinheit 13 derart gewählt, dass deren Betrag einem ganzzahligen Vielfachen des Kehrwerts von f₁ entspricht.

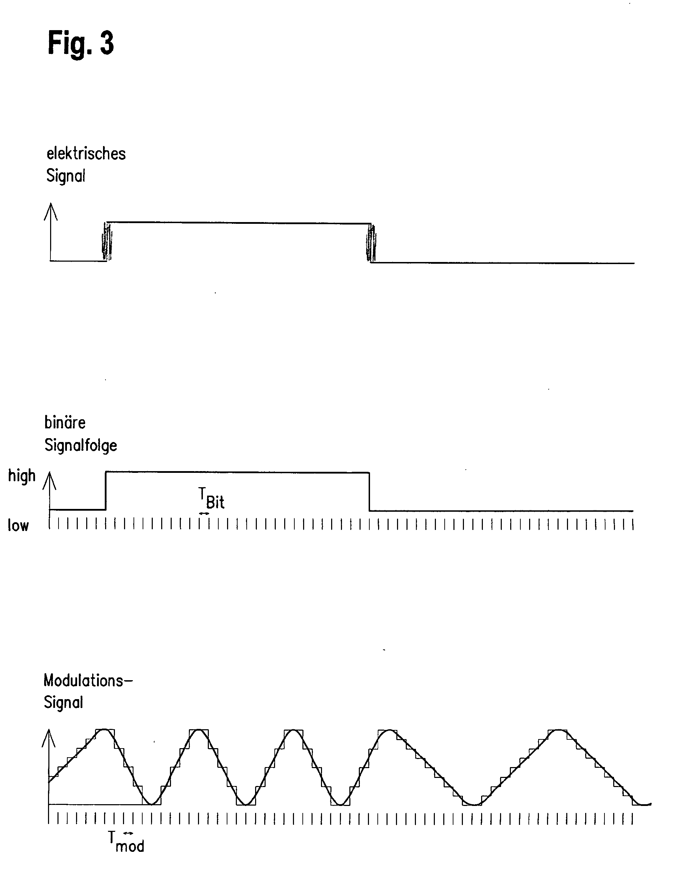

Die Funktionsweise der Signalaufbereitungseinheit 13 ist aus den beiden oberen Diagrammen der Figur 3 ersichtlich.

Das im ersten Diagramm dargestellte elektrische Signal am Ausgang des Empfangselements 12 weist einen Jitter auf. Zu dessen Elimination erfolgt das Retiming des elektrischen Signals in der Signalaufbereitungseinheit 13. Wie aus dem zweiten Diagramm ersichtlich wird so eine binäre Signalfolge mit Lowund High-Werten erhalten, deren Zeitdauern exakt ganzzahlige Vielfache der Bitzeit T_{Bit} sind.

Die so erhaltene binäre Signalfolge wird der Modulationseinheit 14 zugeführt. Dort wird den Sendelichtstrahlen 8 eine Kennung in Form einer Modulation aufgeprägt, welche der binären Signalfolge entspricht.

Im vorliegenden Fall werden die Sendelichtstrahlen 8 mittels der Modulationseinheit 14 frequenzmoduliert. Vorzugsweise wird eine FSK- (frequency shift keying) Modulation durchgeführt. Dabei werden die Low- und High-Werte der binären Signalfolgen in Modulationen unterschiedlicher Frequenzen umgewandelt.

Das dritte Diagramm in Figur 3 zeigt das so erhaltene Modulationssignal. Die Low-Werte der binären Signalfolge werden dem gemäß mit einer ersten Modulationsfrequenz moduliert, die geringer ist als die Modulationsfrequenz mit der die High-Werte der binären Signalfolge moduliert werden.

Die so modulierten Sendelichtstrahlen 8 werden in dem zugeordneten Empfänger 11 empfangen. In der nachgeordneten Auswerteeinheit 16 erfolgt eine Demodulation der Ausgangssignale des Empfängers 11, wodurch die binäre Signalfolge zurückgenommen wird. Diese binäre Signalfolge wird über die angeschlossene Busleitung 3 anschließend als Folge von elektrischen Signalen auf das Bussystem 2 ausgegeben.

Die Modulation der Sendelichtstrahlen 8 in der Modulationseinheit 14 erfolgt als digitale Modulation. Demzufolge besteht das Modulationssignal am Ausgang der Modulationseinheit 14 nicht aus einer Folge analoger Sinus-Signale unterschiedlicher Frequenzen. Vielmehr besteht das Modulationssignal wie in Figur 3 dargestellt aus einer Folge diskreter Stufen, mittels derer die entsprechenden Sinusfunktionen angenähert sind.

Die zeitliche Auflösung der diskreten Signalfolgen ist durch das Modulationszeitintervall T_{mod} vorgegeben, das heißt das Modulationssignal liegt in diskreten Stufen mit einer durch die Zeitstufen T_{mod} vorgegebenen zeitlichen Rasterung vor.

Zur Vorgabe der zeitlichen Rasterung dient ein Taktsignal mit einer Frequenz f₂. Dabei entspricht das Modulationszeitintervall einem ganzzahligen Vielfachen des Kehrwerts von f₂.

Von dem Frequenzgenerator 15 wird ein Taktsignal mit der Frequenz f₁ in die Signalaufbereitungseinheit 13 und ein Taktsignal mit der Frequenz f₂ in die Modulationseinheit 14 eingegeben.

In dem als Quarz-Oszillator ausgebildeten Frequenzgenerator 15 können unterschiedliche Frequenzen f₁, f₂ durch unterschiedliches Teilen einer Grundfrequenz erzeugt werden. Dabei ist die Frequenz f₁ ein ganzzahliges Vielfaches von f₂ oder umgekehrt.

Im vorliegenden Ausführungsbeispiel sind die Frequenzen f₁ und f₂ identisch.

Da die Frequenzen f₁ und f₂ in demselben Frequenzgenerator 15 erzeugt werden, besteht zwischen dem Taktsignal der Frequenz f₁ für die Signalaufbereitungseinheit 13 und dem Taktsignal der Frequenz f₂ für die Modulationseinheit 14 eine feste Phasenbeziehung, die insbesondere auch unabhängig gegen Störeinflüsse ist.

Aus dem Taktsignal der Frequenz f₁ wird die Bitzeit T_{Bit} generiert und damit die zeitliche Rasterung zur Generierung der binären Signalfolge. Dementsprechend wird aus dem Taktsignal der Frequenz f₂ das Modulationszeitintervall T_{mod} generiert und damit die zeitliche Rasterung zur Modulation der Sendelichtstrahlen 8.

Damit besteht zwischen den zeitlichen Rasterungen und der Signalaufbereitungseinheit 13 und der Modulationseinheit 14 eine feste und konstante Beziehung, die insbesondere auch bei Vorhandensein externer Störeinflüsse nicht geändert wird. Besonders vorteilhaft sind die Rasterungen sogar identisch.

Durch die konstante Zuordnung der zeitlichen Rasterungen erfolgt die Modulation der Sendelichtstrahlen 8 in der Modulationseinheit 14 bitsynchron zum Retiming in der Signalaufbereitungseinheit 13. Dies bedeutet, dass durch die Kopplung der Signalaufbereitungseinheit 13 und der Modulationseinheit 14 an einen gemeinsamen Frequenzgenerator 15 ein gegenseitiges Driften der Taktsignale in der Signalaufbereitungseinheit 13 und der Modulationseinheit 14 vermieden wird, wodurch Übertragungsfehler bei der optischen Datenübertragung vermieden werden.

### Bezugszeichenliste

- (1): Optoelektronische Vorrichtung
- (2): Bussystem
- (3): Busleitung
- (4): Master
- (5): Slave
- (6): Sendereinheit
- (7): Empfängereinheit
- (8): Sendelichtstrahlen
- (9): Gehäuse
- (9'): Gehäuse
- (10): Sender
- (11): Empfänger
- (12): Empfangselement
- (13): Signalaufbereitungseinheit
- (14): Modulationseinheit
- (15): Frequenzgenerator
- (16): Auswerteeinheit

- f₁: Frequenz
- f₂: Frequenz
- T_{Bit}: Bitzeit
- T_{mod}: Modulationszeitintervall

## Patentansprüche

1. Optoelektronische Vorrichtung mit wenigstens einem Sender und einem Empfänger sowie einem Empfangselement und einer Signalaufbereitungseinheit, welche dem Sender vorgeordnet sind, wobei eine Folge von elektrischen Signalen am Empfangselement in der Signalaufbereitungseinheit in eine binäre Signalfolge von Low-Signalen und High-Signalen umgesetzt wird, deren Zeitdauern ganzzahlige Vielfache einer Bitzeit T_{Bit} sind, und wobei zur optischen Datenübertragung den vom Sender emittierten Sendelichtstrahlen mittels einer Modulationseinheit den binären Signalfolgen entsprechende Kennungen in Form einer digitalen Modulation mit einer durch ein Modulationszeitintervall T_{mod} gegebenen zeitlichen Auflösung aufgeprägt sind, **dadurch gekennzeichnet, dass** der Signalaufbereitungseinheit (13) und der Modulationseinheit (14) ein gemeinsamer Frequenzgenerator (15) zugeordnet ist, über welchen der Signalaulbereitungseinheit (13) ein Taktsignal mit einer Frequenz f₁ zur Generierung der Bitzeit T_{Bit} und über welchen der Modulationseinheit (14) ein Taktsignal mit einer Frequenz f₂ zur Generierung des Modulationszeitintervalls T_{mod} zugeführt ist.

2. Optoelektronische Vorrichtung nach Anspruch 1, **dadurch gekennzeichnet, dass** die Bitzeit T_{Bit} ein ganzzahliges Vielfaches des Kehrwertes von f₁ ist.

3. Optoelektronische Vorrichtung nach einem der Ansprüche 1 oder 2, **dadurch gekennzeichnet, dass** das Modulationszeitintervall T_{mod} ein ganzzahliges Vielfaches des Kehrwertes von f₂ ist.

4. Optoelektronische Vorrichtung nach einem der Ansprüche 1 - 3, **dadurch gekennzeichnet, dass** der Frequenzgenerator (15) von einem Quarz-Oszillator gebildet ist.

5. Optoelektronische Vorrichtung nach einem der Ansprüche 1 - 4, **dadurch gekennzeichnet, dass** die Frequenzen f₁ und f₂ gleich groß sind.

6. Optoelektronische Vorrichtung nach einem der Ansprüche 1 - 4, **dadurch gekennzeichnet, dass** die Frequenz f₁ ein ganzzahliges Vielfaches der Frequenz f₂ ist.

7. Optoelektronische Vorrichtung nach einem der Ansprüche 1 - 4, **dadurch gekennzeichnet, dass** die Frequenz f₂ ein ganzzahliges Vielfaches der Frequenz f₁ ist.

8. Optoelektronische Vorrichtung nach einem der Ansprüche 1 - 7, **dadurch gekennzeichnet, dass** die Sendelichtstrahlen (8) phasen- oder frequenzmoduliert sind.

9. Optoelektronische Vorrichtung nach Anspruch 7, **dadurch gekennzeichnet, dass** die Sendelichtstrahlen (8) FSK-moduliert sind.

10. Optoelektronische Vorrichtung nach einem der Ansprüche 1 - 9, **dadurch gekennzeichnet, dass** die optische Datenübertragung in Form einer Freiraum-Datenübertragung erfolgt.

11. Optoelektronische Vorrichtung nach einem der Ansprüche 1 - 10, **dadurch gekennzeichnet, dass** die optische Datenübertragung leitungsgebunden erfolgt.

12. Optoelektronische Vorrichtung nach Anspruch 11, **dadurch gekennzeichnet, dass** zwischen dem Sender (10) und dem Empfänger (11) eine Glasfaserstrecke angeordnet ist.

13. Optoelektronische Vorrichtung nach einem der Ansprüche 1 - 12, **dadurch gekennzeichnet, dass** diese Bestandteil eines Bussystems (2) ist.

14. Optoelektronische Vorrichtung nach Anspruch 13, **dadurch gekennzeichnet, dass** diese über Busleitungen (3) an das Bussystem (2) angeschlossen ist, wobei über die Busleitungen (3) übertragene elektrische Signale in das Empfangselement (12) eingekoppelt werden.
